# DEMANDE DE BREVET EUROPEEN

(11) **EP 0 794 377 A1**
(43) Date de publication de la demande: **10.09.1997**
(21) Numéro de dépôt: 97400461.6
(22) Date de dépôt: 28.02.1997
(51) Int. Cl.: F16L 11/08

(54) **Tuyau flexible**

(30) Priorité: 04.03.1996 FR 9602927
(71) Demandeur: Société SOTEP, 60310 Roye sur Matz (FR)
(72) Inventeur: Zingraff, Michel, 75009 Paris (FR)
(74) Mandataire: Boivin, Claude

(57) **Abrégé**

Tuyau qui comprend une âme tubulaire (1), en caoutchouc ou en matière plastique, autour de laquelle sont disposées une couche (2) de tricot textile constituée par un fil (3) tricoté en spirale et formant des côtes (4), parallèles à l'axe de l'âme (1), une nappe de fils guipés (5) enroulée en spirale, et une couche externe de protection (6).

La nappe de fils guipés (5) est enroulée dans le sens opposé à celui du tricotage du tricot textile.

## Description

La présente invention concerne les tuyaux comprenant une âme tubulaire, en caoutchouc ou en matière plastique, autour de laquelle sont disposées une couche de tricot textile constituée par un fil tricoté en spirale et formant des côtes parallèles à l'âme, et des fils enroulés en spirale, et une couche externe de protection. Un tuyau de ce genre est décrit dans le document FR-A-1284920.
Ces tuyaux ont tendance à vriller quand ils contiennent un fluide liquide ou gazeux sous forte pression. C'est le cas notamment dans le tuyau décrit dans le document ci-dessus dans lequel les fils enroulés dans le sens du tricotage tendent à accentuer le vrillage.
La présente invention a pour objet un tuyau du type ci-dessus perfectionné de manière à rester parfaitement stable en service et ne présentant pratiquement aucun vrillage.
Le tuyau selon l'invention est caractérisé en ce qu'il comporte une nappe de fils guidés enroulés en spirale dans le sens opposé à celui du tricotage du tricot textile.

Dans un mode de réalisation préféré la nappe de fils guipés est interposée entre l'âme et le tricot textile. On a décrit ci-après, à titre d'exemple non limitatif, un mode de réalisation du tuyau selon l'invention, avec référence au dessin annexé dans lequel :

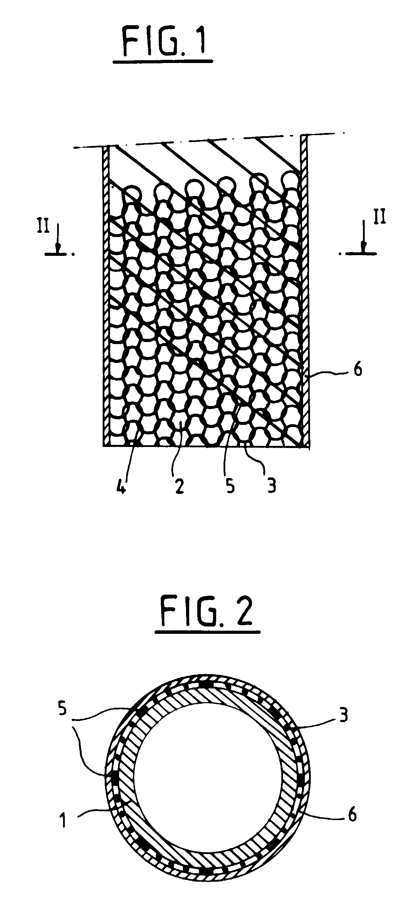

La Figure 1 est une vue en élévation du tuyau, la couche de protection étant représentée en coupe.
La Figure 2 en est une coupe transversale, suivant II-II de la Figure 1.

Tel qu'il est représenté au dessin, le tuyau selon l'invention comprend une âme tubulaire 1 en caoutchouc sur laquelle est disposée une couche de tricot textile 2, par exemple de type point de jersey qui est constitué par un fil 3 tricoté en spirale et dont les côtes 4 sont parallèles à l'axe de l'âme 1.

Entre l'âme 1 et le tricot 2 est interposée une nappe de fils guipés 5 enroulée en spirale dans le sens contraire au sens du tricotage du fil 3. Dans l'exemple représenté, la nappe 5 est constituée de huit fils groupés. Chacun de ces fils est constitué par un fil textile revêtu de caoutchouc ou de matière plastique.

Le tricot textile 2 est recouvert d'une couche protectrice 6, par exemple en PVC extrudé, qui assure la liaison, avec l'âme 1 du tricot 2 et des fils guipés 5.

Lorsque le tuyau contient un fluide sous pression, il aurait tendance à vriller dans le sens d'enroulement du fil 3; mais les fils 5 s'opposent à cette tendance et le tuyau ne vrille pas, tout en restant souple.

Il va de soi que la présente invention ne doit pas être considérée comme limitée au mode de réalisation décrit et représenté, mais en couvre, au contraire, toutes les variantes.

## Revendications

1. Tuyau comprenant une âme tubulaire (1), en caoutchouc ou en matière plastique, autour de laquelle sont disposées une couche (2) de tricot textile constituée par un fil (3) tricoté en spirale et formant des côtes (4),parallèles à l'axe de l'âme (1), une nappe de fils guipés (5) enroulée en spirale, et une couche externe de protection (6),
caractérisé en ce que la nappe de fils guipés (5) est enroulée dans le sens opposé à celui du tricotage du tricot textile.

2. Tuyau selon la revendication 1,
caractérisé en ce que la nappe de fils guipés (5) est interposée entre l'âme (1) et le tricot textile (2).
